# EUROPEAN PATENT SPECIFICATION

(11) **EP 3 887 458 B1**
(45) Date of publication and mention of the grant of the patent: **19.07.2023**
(21) Application number: 19808800.7
(22) Date of filing: 22.11.2019
(51) Int. Cl.: C09D 7/00, C09D 183/00, D21H 17/00, D21H 19/00, D21H 21/00, D21H 23/00, D21H 25/00

(54) **SILICONE COATING ENABLED BY A SUPPORT LAYER**
AUF EINER TRÄGERSCHICHT BASIERENDE SILIKONBESCHICHTUNG
REVÊTEMENT SILICONE ACTIVÉ PAR UNE COUCHE DE SUPPORT

(30) Priority: 26.11.2018 EP 18208397
(43) Date of publication of application: 06.10.2021
(73) Proprietor: Billerud Aktiebolag (publ), 169 27 Solna (SE)
(72) Inventor: LARSSON, Johan, 805 98 Gävle (SE)
(74) Representative: Kransell & Wennborg KB
(86) International application number: PCT/EP2019/082295
(87) International publication number: WO 2020/109179

(56) References cited:
- WO-A1-01/59215
- WO-A1-99/09107
- WO-A1-2013/093872
- WO-A1-2015/183572
- WO-A2-2005/063890
- WO-A2-2014/025665
- FR-A1- 2 954 361
- US-A1- 2002 195 217
- US-A1- 2009 202 806

## Description

### TECHNICAL FIELD

The invention relates to field of silicone coating of paper substrates.

### BACKGROUND

In a conventional process of coating silicone on a paper substrate, a four- or five-roller system that requires very exact control of the deflection of the rollers is used. This precise control does not lend itself to extended widths of rollers. Productivity has been increased by raising the speed of the process, but today there is hardly any room left for further raising the speed in an offline process.

In-line application of silicone would be the preferred solution if only the four-or five-roller system was scalable in width. It is however very difficult to construct such a system that is both wide and capable of high-speed operation.

An advantage of the four- or five-roller system is however that the coat weight of silicone, which is an expensive chemical, can be reduced via the successive distribution of silicone among the rolls in the system.

There exist previously described prior art.

WO2015183572 A1 discloses a release modifier composition including a polyorganosiloxane polymer and a release modifier. It is specified that release coatings are comprised of a base polymer, a cross-linker, an inhibitor and curing catalyst. To modify the release force to remove a label from a release liner a modifier additive is included in the release coating formulation. The coating weight is 1.6 gsm, *i*.*e*. 1.6 g/m², on glassine.

WO2014025665 A2 discloses folded and lotioned web products, such as tissue paper products. Silicone wax can be applied as immobilizing agent preventing migration of the emollient from the lotion into the fibrous structure.

WO2013093872 A1 discloses wrinkle-resistant paper, in particular banknotes wherein a fiber substrate is impregnated with a hydroxylated polymeric binder that is at least partially covalently bonded to at least one siloxane derivative.

FR2954361 A1 discloses a multilayer structure having a bottom plastics film, one anti-adhesive intermediate layer on top of the plastics film and one printable top layer on top of the anti-adhesive layer. The anti-adhesive intermediate layer may be made of silicone, and the printable top layer a paper.

US20090202806 A1 discloses a multilayer film comprising a film having a non-denaturated clay as main component. The film is subjected to a surface treatment comprising forming, on the surface of the film, a silicon oxide film, a fluorine-based film, a silicon-based film, a polysiloxane film, a fluorine-containing organopolysiloxane film, an acrylic resin film, a vinyl chloride resin film, a polyurethane resin film, a high water-repellent plating film, a metallic vapor deposition film, or a carbon vapor deposition film. In addition, the multilayer film comprises and one or more among a metal foil, a plastic film, rubber and paper.

WO2005063890 A2 discloses a silicone composition that is applied directly to paper without an intermediate polymer layer.

US20020195217 A1 discloses a polymer film enclosure for a paper, wherein the polymer can comprise an aminofunctional silicone.

WO0159215 A1 discloses a coating composition for coating paper made of a first and second mineral-containing pigment mix and a first and second binding agent.

WO9909107 A1 discloses a release coating that is used directly on paper without intermediate polymer layer.

### SUMMARY

The inventor have realized that there is a need for a new silicone coating process that allows for coating of greater widths, such as the full width of paper produced in a paper machine.

For this need, a single film press is not good enough because both the coverage and the possibility for low grammage are compromised in a way that is not economically feasible.

Curtain coaters are however better suited for the widths of paper machines. The coating head of a curtain coater is inherently designed for high coating speeds. Curtain coaters are also well suited because they produce excellent cross direction (CD) profiles independent of the paper substrate. The machine direction (MD) profile is also close to perfect due to the static coating head fed by a gear pump and controlled by a flow meter.

A curtain coater thus solves coverage problem, the speed problem and the width problem. What remains to be solved is then the problem of applying very low grammages/coat weights. Normally, curtain coaters cannot coat very low grammages because they are inherently dependent on the difference between the surface energy of the liquid and the contact angle with air as the curtain travels downwards from the nozzle and to the paper. The slot that feeds the coating composition produces a thin liquid sheet (the "curtain") that falls freely (for typically 15-25 cm) before impinging on the paper. To prevent the liquid curtain from breaking up into strands or droplets, a certain flow rate is required. Further, the surface tension of the liquid typically has to be reduced to a value below 40 mN/m for the curtain to withstand the influence of the air. This is usually done by adding a surfactant in very small amount (typically 0.05-0.2%).

The limit of industrial run ability has been found to be a flow rate of about 6.0 l/min*m (and in practice a 25 % margin is desired meaning a flow of at least 7.5 l/min*m).

Given the flow rate limitation, it is difficult, if not impossible to coat 0.3 g/m² silicone using a "normal" curtain coating technique. This can be illustrated by the examples of table 1.

**Table 1.**

| Coat weight (g/m²) | Speed (m/min) | Solids content (%) | Density (kg/l) | Flow rate (l/min*min) |
|---|---|---|---|---|
| 0.3 | 400 | 40 | 1.02 | 0.3 |
| 0.3 | 1500 | 40 | 1.02 | 1.1 |
| 0.3 | 1500 | 8 | 1.02 | 5.5 |

Table 1 thus shows that even if the speed is increased to 1500 m/min and the solids content of the coating composition is decreased to 8 %, it is not possible to reach the flow rate limit for a coat weight of 0.3 g/m².

The inventors have found that it is possible to overcome this restriction by using a two-slot coater. In detail, the first slot is used to form a support layer, while the second slot is used to form the silicone-containing layer. The design of a two-slot coater is such that the two layers are in contact and thus form a common curtain. The flow rate of the support layer thereby contributes to the total flow rate of the curtain, which can be brought up to above 6 l/min*m also when the flow rate of the silicone-containing layer is low. Further, the support layer forms an almost perfect surface on the paper substrate for the formation of a thin silicone coating.

The cheapest media for the support layer would be water, but water is Newtonian and has no elasticity and is therefore difficult to use in a curtain coater. Further, it is undesirable from a drying standpoint to have lower solids content in the support layer than in the silicone layer that covers it. Therefore, the inventors have concluded that the composition forming the support layer should comprise a polymer in such an amount that its solids content is at least as high as the solids content of the composition forming the silicone layer. The inventors have further concluded that for the support layer to efficiently bear the silicone layer, the polymer composition (that forms the support layer) advantageously has higher viscosity than the silicone composition (that forms the silicone layer).

This can be illustrated by the examples in table 2, in which starch is the polymer of the support layer.

**Table 2.**

| Ex. | | Speed (m/min) | Dry coat weight (g/m²) | Solids content (%) | Density (kg/l) | Flow rate (l/min*m) |
|---|---|---|---|---|---|---|
| | Support layer | 700 | 2.0 | 20.0 | 1.02 | 6.9 |
| | Silicone layer | 700 | 0.1 | 15.0 | 1.02 | 0.5 |
| 1 | Total | | 2.1 | | | 7.3 |
| | Support layer | 1500 | 1.5 | 20.0 | 1.02 | 11.0 |
| | Silicone layer | 1500 | 0.1 | 15.0 | 1.02 | 1.0 |
| 2 | Total | | 1.6 | | | 12.0 |
| | Support layer | 1000 | 1.5 | 20.0 | 1.02 | 7.4 |
| | Silicone layer | 1000 | 0.05 | 8.0 | 1.02 | 0.6 |
| 3 | Total | | 1.6 | | | 8.0 |
| | Support layer | 1000 | 3.0 | 40.0 | 1.02 | 7.4 |
| | Silicone layer | 1000 | 0.2 | 40.0 | 1.02 | 0.5 |
| 4 | Total | | 3.2 | | | 7.8 |
| | Support layer | 500 | 4.0 | 25.0 | 1.02 | 7.8 |
| | Silicone layer | 500 | 0.3 | 20.0 | 1.02 | 0.7 |
| 5 | Total | | 4.3 | | | 8.6 |

It is notable that all examples in table 2 reach a total flow rate above the limit of 6 l/min*m.

There is thus provided a method of coating a paper substrate using a multi-slot curtain coater, wherein a water-based composition comprising a polymer is fed through a first slot and a water-based composition comprising silicone is fed through a second slot to form a curtain of at least two layers that coats the paper with a support layer and a silicone layer on top of the support layer and wherein:
- the flow rate (l/min*m) is at least five times higher for the polymer composition than for the silicone composition;
- the flow rate of the curtain is at least 6.0 l/min*m, such as 6.0-50 l/min*m, such as 6.0-15 l/min^{∗}m;
- the coating speed is 500-2000 m/min, such as 500-1500 m/min;
- the viscosity is preferably higher for polymer composition than for the silicone composition, wherein the viscosity is measured according to ISO 3219:1993 at 25 °C using a shear rate of 25 s⁻¹;
- the solids content of the polymer composition is 8.0-40 % and the solids content of the silicone composition is 8.0-40 %; and
- the solids content of the polymer composition is higher than or equal to the solids content of the silicone composition.

The above method can be used to produce a new product. There is thus provided a coated paper web comprising a paper substrate coated with a support layer and a continuous silicone layer provided on top of the support layer, which support layer comprises a polymer, wherein the width of the coated paper web is 3-9 m and the dry coat weight of the continuous silicone layer is 0.05-0.50 g/m², preferably 0.05-0.30 g/m².

The present disclosure enables the provision of a relatively even silicone surface on a relatively rough paper substrate. The present disclosure may thus reduce or even eliminate the need for surface-smoothening treatments, such as calendering and/or pigment coating, upstream the silicone coating process without necessitating the application of a thick silicone layer. Further, the present disclosure enables the provision of silicone coatings of particularly high quality, such as silicone coatings that allow for robot peeling, at a substantially lower silicone consumption than in the prior art when smooth paper substrates are used.

### BRIEF DESCRIPTION OF THE FIGURES

Figure 1 is a plot of the dynamic surface tension (mN/m) versus the flow rate (cm²/s) at a given height (a distance from the die lip of 100 mm).
Figure 2 is a plot of the dynamic surface tension (mN/m) versus the distance from the die lip (mm) at a given flow rate (2.5 cm²/s).

### DETAILED DESCRIPTION

As a first aspect of the present disclosure, there is thus provided a method of coating a paper substrate using a multi-slot curtain coater, such as a two-slot coater. Such coaters are commercially available. An example of a commercially available curtain coater having at least two slots is the slide curtain coater from TSE Troller AG, Switzerland.

In the method, a water-based composition comprising a polymer ("polymer composition") is fed through a first slot and a water-based composition comprising silicone ("silicone composition") is fed through a second slot to form a curtain of at least two layers. The at least two layers are thus in contact with each other. The curtain coats the paper substrate with a support layer (formed from the polymer composition) and a silicone layer (formed from the silicone composition) on top of the support layer.

To facilitate the application of small amounts of silicone, the flow rate (l/min*m) is at least five times higher for the polymer composition than for the silicone composition. Consequently, the flow rate (l/min*m) through the first slot is at least five times higher than the flow rate (l/min*m) through the second slot.

In a preferred embodiment, the flow rate (l/min*m) is at least eight times higher for the polymer composition than for the silicone composition. The flow rate (l/min*m) of the polymer composition can be up to 40 times higher than the flow rate (l/min*m) of the silicone composition. Normally, it is up to 20 times higher.

In a preferred embodiment, the flow rate (l/min*m) is five to fifteen times higher for the polymer composition than for the silicone composition.

A typical lower limit for the flow rate of the silicone composition is 0.5 l/min*m.

As explained above, the flow rate of the curtain must be at least 6.0 l/min*m. A practical range is 6.0-50 l/min^{∗}m, such as 6.0-15 l/min^{∗}m. To have a margin for variations, the flow rate of the curtain is preferably at least 7.5 l/min*m, such as 7.5-50 l/min^{∗}m, such as 7.5-15 l/min^{∗}m.

To reach such a flow rate, the coating speed is at least 400 m/min and preferably at least 500 m/min. A practical upper limit for the coating speed is 2000 m/min, such as 1500 m/min.

To effectively support the silicone composition on the paper substrate, the viscosity of the polymer composition is preferably higher than the viscosity of the silicone composition. According to the present disclosure, viscosity is measured according to ISO 3219:1993 at 25 °C using a shear rate of 25 s⁻¹. Such a measurement may be carried out according to the following protocol:
1) Set temperature to 25 °C;
2) Pour sample into cup and immerse the bob then stabilize rheometer and sample to 25 °C;
3) Apply pre-shear to erase shear history at 100 s-1 during 60 seconds;
4) Rest for 60 seconds;
5) Measurement by applying a hold shear rate value of 25 s⁻¹ for 60 seconds;
6) Select viscosity value at time = 60 seconds; and
7) Report value as viscosity in mPas at 25 s-1 and 25 °C.

For both compositions, the viscosity is typically in the range of 50-2000 mPas, preferably 100-1000 mPas.

To facilitate handling of the compositions and drying of the coated substrate downstream the curtain coater the solids content of both the polymer composition and the silicone composition is in the range of 8.0-40 %. Further, the drying is facilitated by the solids content of the polymer composition being higher than or equal to the solids content of the silicone composition. In other words it is undesired from a drying perspective to cover a layer of higher water content with a layer of lower water content.

The solids content of the polymer composition is preferably 15-40 %, such as 20-40 %. The solids content of the silicone composition is preferably 10-40 %, such as 10-35 %.

As discussed above, thin layers of silicone can be applied using the method of the first aspect. In an embodiment, the dry coat weight of the silicone layer is 0.05-1.0 g/m², such as 0.05-0.8 g/m², such as 0.10-0.8 g/m². The method of the first aspect is particularly well suited for coating exceptionally small amounts of silicone. In a preferred embodiment, the dry coat weight of the silicone layer is thus 0.05-0.30 g/m², such as 0.10-0.30 g/m².

The dry coat weight is typically higher for the support layer than for the silicone layer. In one embodiment, the dry coat weight of the support layer is 0.50-5.0 g/m², such as 1.0-4.0 g/m².

The polymer of the polymer composition may be starch, carboxymethyl cellulose (CMC), polyvinyl alcohol (PVOH), a styrene-butadiene copolymer, a styrene-acrylate copolymer or a combination thereof. In a preferred embodiment, the polymer of the polymer composition is starch.

In addition to polymer(s), the polymer composition may comprise an inorganic filler, such as montmorrillonite, kaolinite, talc or calcium carbonate.

The silicone composition normally comprises a surfactant, preferably in such an amount that the dynamic surface tension (measured in a falling curtain) is 40 mN/m or lower. A suitable surfactant for the silicone composition may for example be selected from the Surfynol and Dynol range of products (Air Products) suitable for curtain coating, in particular the Dynol 300, 600, 800 or 900 series (e.g. Dynol 607) or the Surfynol 400 series (e.g. Surfynol 420). Likewise, the polymer composition normally comprises a surfactant, preferably in such an amount that the dynamic surface tension (measured in a falling curtain) is 40 mN/m or lower. An example of a suitable surfactant for the polymer composition is BASF Lutensol ON 70, in particular when the polymer is a polysaccharide or PVOH. How to measure the dynamic surface tension in a falling curtain is explained below.

The method of the first aspect can be used on various types of paper substrates, including paper substrates having one or several layers. The grammage of the paper substrate may for example be 28-480 g/m². In one embodiment, the grammage of the paper substrate is 28-120 g/m², which match the paper qualities normally used for the production of release liner. Such substrates typically have only a single layer. According to the present disclosure, the grammage of a paper substrate is measured according to ISO 536:2012.

The method of the first aspect may be carried out offline (i.e. separate from the paper machine), but one of its main benefits is that it can be integrated in a paper machine and thus carried out inline. As discussed above, the curtain-based method is capable of uniformly coating the full width of a paper web in a paper machine. Accordingly, the width of the curtain may be 3-9 m, such as 3-8 m. That being said, the method can be used also on smaller or greater widths. It is generally not commercially viable to coat widths below 0.5 m.

The method of the first aspect enables the preparation of a new product. As a second aspect of the present disclosure, there is thus provided a coated paper web comprising a paper substrate coated with a support layer and a continuous silicone layer provided on top of the support layer, which support layer comprises a polymer, wherein the width of the coated paper web is 3-9 m, such as 4-9 m, such as 4-8 m, and the dry coat weight of the continuous silicone layer is 0.05-0.50 g/m², preferably 0.05-0.30 g/m², such as 0.10-0.30 g/m².

It follows from the discussion above that the dry coat weight of the support layer is higher than the dry coat weight of the silicone layer. It is preferably at least five times higher, more preferably at least eight times higher.

Otherwise, the embodiments of the first aspect apply to the second aspect *mutatis mutandis.*

### METHOD OF MEASURING THE DYNAMIC SURFACE TENSION

A dynamic surface tension measurement by the Mach angle method in a falling curtain is described below.

### Introduction

The purpose of this method is to calculate the dynamic surface tension in a falling curtain by measuring the Mach half angle of a standing wave generated by a point disturbance in the curtain. The calculation is based on the work by Brown (1961). Calculated surface tension values agree well with experimental data from Antoniades et al. (1980) and with theoretical calculations from Sünderhauf (2001). The data sheet programming was created and verified by Dr. Peter M. Schweizer of Polytype Converting AG on September 11, 2009. The required input information concerns details of the die geometry, physical fluid properties (density and rheological data according to the Carreau model), as well as parameters related to the measurement of the Mach angle. The Mach angle device for these tests is marketed by the company TSE Troller A.G., Switzerland (https://www.tse-coating.ch/), which also provides an excel data sheet for making the necessary calculations.

### Method

Pump the coating composition through the curtain die and let the falling liquid form a curtain. Determine the lowest possible flow rate that by slowly increasing the flow rate until a film is formed across the whole width. This can be used as the lowest flow rate used in the following measurements.

Decide the useful curtain height (typically 15-25 cm), i.e. the distance of free fall, for the application. This determines the maximum distance from the die lip that is used in the following measurements.

Choose three to five different pump flow rates and three to five different heights in the curtain for further examination.

Use a steel needle or similar to disturb the curtain without punctuating it at the chosen heights and at the chosen flow rates. Record the angle formed from the needle and downwards, also known as the Mach angle. A complete "Mach-angle device" including the needle and a graded disc with angles can conveniently be obtained from TSE Troller A.G, Switzerland. Divide the value of the Mach angle by two.

Insert the half Mach angle in the data sheet along with the flow rate at that data point and the rest of the data needed for the calculations.

Extract the dynamic surface tension and plot the dynamic surface tension versus the height of the curtain in a first graph. This will show if the surface tension is stable along the full height of the curtain. The graph will also reveal if the dynamic surface tension data is in a good range, which is at or below 40 mN/m.

Extract the dynamic surface tension and plot the dynamic surface tension versus the flow rate at a given height. This graph will show if the dynamic surface tension is dependent or independent of the flow rate.

Both curves should show independence of height and flow rate for stable operation in curtain coating. There is a general recommendation is that the dynamic surface tension is 40mN/m or lower.

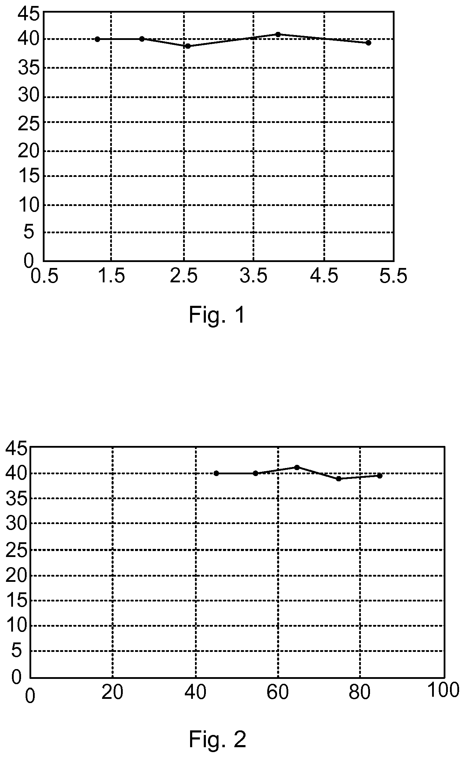

Figure 1 is an example of a graph showing a surface tension of ~40 mN/m that is considered to be independent of the flow. Figure 2 is an example of a graph showing a surface tension of ~40 mN/m that is considered to be independent of the height/distance from the die lip.

### References

Brown, D.R., 1961, A study of the behavior of a thin sheet of moving liquid, Journal of Fluid Mechanics, 10:297
Antoniadis, M.G., Godwin, R. and Lin, S.P., 1980, A new method for measuring dynamic surface tension, J. Colloidal Interface Science, 77:583
Sünderhauf, G., 2001, Strömungsuntersuchung des Vorhangstreichens von Papier, Ph.D. Thesis, University of Erlangen

## Claims

1. A method of coating a paper substrate using a multi-slot curtain coater, wherein a water-based composition comprising a polymer is fed through a first slot and a water-based composition comprising silicone is fed through a second slot to form a curtain of at least two layers that coats the paper with a support layer and a silicone layer on top of the support layer and wherein:
- the flow rate (l/min*m) is at least five times higher for the polymer composition than for the silicone composition;
- the flow rate of the curtain is at least 6.0 l/min*m, such as 6.0-50 l/min*m, such as 6.0-15 l/min^{∗}m;
- the coating speed is 500-2000 m/min, such as 500-1500 m/min;
- the viscosity is higher for polymer composition than for the silicone composition, wherein the viscosity is measured according to ISO 3219:1993 at 25 °C using a shear rate of 25 s⁻¹;
- the solids content of the polymer composition is 8.0-40 % and the solids content of the silicone composition is 8.0-40 %; and
- the solids content of the polymer composition is higher than or equal to the solids content of the silicone composition.

2. The method according to claim 1, wherein the dry coat weight of the support layer is 0.5-5 g/m² and the dry coat weight of the silicone layer is 0.05-1.0 g/m².

3. The method according to claim 2, wherein the dry coat weight of the support layer is 1-4 g/m² and the dry coat weight of the silicone layer is 0.05-0.8 g/m², such as 0.05-0.3 g/m².

4. The method according to any one of the preceding claims, wherein the flow rate (l/min*m) is at least eight times higher for the polymer composition than for the silicone composition.

5. The method according to any one of the preceding claims, wherein the flow rate (l/min^{∗}m) is up to 20 times higher for the polymer composition than for the silicone composition.

6. The method according to any one of the preceding claims, wherein the flow rate (l/min^{∗}m) for the silicone composition is at least 0.5 l/min^{∗}m.

7. The method according to any one of the preceding claims, wherein the flow rate of the curtain is at least 7.5 l/min^{∗}m, such as 7.5-50 l/min^{∗}m, such as 7.5-15 l/min^{∗}m;

8. The method according to any one of the preceding claims, wherein the grammage measured according to ISO 536:2012 of the paper substrate is 28-120 g/m².

9. The method according to any one of the preceding claims, wherein the coating using the multi-slot curtain coater is carried out in-line in a paper machine.

10. The method according to any one of the preceding claims, wherein the width of the curtain is 0.5-9 m, such as 3-9 m, such as 4-8 m.

11. The method according to any one of the preceding claims, wherein the polymer composition comprises starch, carboxymethyl cellulose (CMC), polyvinyl alcohol (PVOH), a styrene-butadiene copolymer or a styrene-acrylate copolymer.

12. The method according to any one of the preceding claims, wherein solids content of the polymer composition is 15-40 %, such as 20-40 %.

13. The method according to any one of the preceding claims, wherein solids content of the silicone composition is 10-40 %, such as 10-35 %.

14. A coated paper web comprising a paper substrate coated with a support layer and a continuous silicone layer provided on top of the support layer, which support layer comprises a polymer, wherein the width of the coated paper web is 3-9 m and the dry coat weight of the continuous silicone layer is 0.05-0.50 g/m², preferably 0.05-0.30 g/m².

15. The coated paper web according to claim 14, wherein the dry coat weight of the support layer at least five times higher than the dry coat weight of the silicone layer.

## Patentansprüche

1. Verfahren zum Beschichten eines Papiersubstrats unter Verwendung eines Mehrschlitz-Vorhangbeschichters, wobei eine wasserbasierte Zusammensetzung, die ein Polymer enthält, durch einen ersten Schlitz und eine wasserbasierte Zusammensetzung, die Silikon aufweist, durch einen zweiten Schlitz zugeführt wird, um einen Vorhang aus mindestens zwei Schichten zu bilden, der das Papier mit einer Trägerschicht und einer Silikonschicht auf der Trägerschicht überzieht, und wobei:
- die Durchflussrate (1/min*m) für die Polymerzusammensetzung mindestens fünfmal höher als für die Silikonzusammensetzung ist;
- die Strömungsgeschwindigkeit des Vorhangs mindestens 6,0 l/min*m, beispielsweise 6,0-50 l/min*m, beispielsweise 6,0-15 l/min*m, beträgt;
- die Beschichtungsgeschwindigkeit 500-2000 m/min, beispielsweise 500-1500 m/min, beträgt;
- die Viskosität für die Polymerzusammensetzung höher ist als für die Silikonzusammensetzung, wobei die Viskosität gemäß ISO 3219:1993 bei 25 °C unter Verwendung einer Scherrate von 25 s⁻¹ gemessen wird;
- der Feststoffgehalt der Polymerzusammensetzung 8,0-40 % beträgt und der Feststoffgehalt der Silikonzusammensetzung 8,0-40 % beträgt; und
- der Feststoffgehalt der Polymerzusammensetzung höher oder gleich dem Feststoffgehalt der Silikonzusammensetzung ist.

2. Verfahren nach Anspruch 1, wobei das Trockenschichtgewicht der Trägerschicht 0,5-5 g/m² beträgt und das Trockenschichtgewicht der Silikonschicht 0,05-1,0 g/m² beträgt.

3. Verfahren nach Anspruch 2, wobei das Trockenschichtgewicht der Trägerschicht 1-4 g/m² beträgt und das Trockenschichtgewicht der Silikonschicht 0,05-0,8 g/m², beispielsweise 0,05-0,3 g/m², beträgt.

4. Verfahren nach einem der vorhergehenden Ansprüche, wobei die Durchflussrate (l/min*m) für die Polymerzusammensetzung mindestens achtmal höher ist als für die Silikonzusammensetzung.

5. Verfahren nach einem der vorhergehenden Ansprüche, wobei die Durchflussrate (l/min*m) für die Polymerzusammensetzung bis zu 20-mal höher ist als für die Silikonzusammensetzung.

6. Verfahren nach einem der vorhergehenden Ansprüche, wobei die Durchflussrate (l/min*m) für die Silikonzusammensetzung mindestens 0,5 1/min*m beträgt.

7. Verfahren nach einem der vorhergehenden Ansprüche, wobei die Durchflussrate des Vorhangs mindestens 7,5 l/min*m, beispielsweise 7,5-50 l/min*m, beispielsweise 7,5-15 l/min* beträgt.

8. Verfahren nach einem der vorhergehenden Ansprüche, wobei die nach ISO 536:2012 gemessene Grammatur des Papiersubstrats 28-120 g/m² beträgt.

9. Verfahren nach einem der vorhergehenden Ansprüche, wobei die Beschichtung unter Verwendung des Mehrschlitz-Vorhangbeschichters linear in einer Papiermaschine durchgeführt wird.

10. Verfahren nach einem der vorhergehenden Ansprüche, wobei die Breite des Vorhangs 0,5-9 m, beispielsweise 3-9 m, beispielsweise 4-8 m, beträgt.

11. Verfahren nach einem der vorhergehenden Ansprüche, wobei die Polymerzusammensetzung Stärke, Carboxymethylcellulose (CMC), Polyvinylalkohol (PVOH), ein Styrol-Butadien-Copolymer, oder ein Styrol-Acrylat-Copolymer aufweist.

12. Verfahren nach einem der vorhergehenden Ansprüche, wobei der Feststoffgehalt der Polymerzusammensetzung 15-40 %, beispielsweise 20-40 %, beträgt.

13. Verfahren nach einem der vorhergehenden Ansprüche, wobei der Feststoffgehalt der Silikonzusammensetzung 10-40 %, beispielsweise 10-35 %, beträgt.

14. Beschichtete Papierbahn, aufweisend ein mit einer Trägerschicht beschichtetes Papiersubstrat und eine auf der Trägerschicht vorgesehene kontinuierliche Silikonschicht, wobei die Trägerschicht ein Polymer aufweist, wobei die Breite der beschichteten Papierbahn 3-9 m beträgt und das Trockenschichtgewicht der kontinuierlichen Silikonschicht 0,05-0,50 g/m², vorzugsweise 0,05-0,30 g/m², beträgt.

15. Beschichtete Papierbahn nach Anspruch 14, wobei das Trockenschichtgewicht der Trägerschicht mindestens fünfmal höher ist als das Trockenschichtgewicht der Silikonschicht.

## Revendications

1. Procédé de revêtement d'un substrat de papier à l'aide d'une coucheuse à rideau à fentes multiples, dans lequel une composition à base d'eau comprenant un polymère est introduite par une première fente et une composition à base d'eau comprenant du silicone est introduite par une seconde fente pour former un rideau d'au moins deux couches qui recouvre le papier d'une couche de support et d'une couche de silicone sur la couche de support, et dans lequel :
- le débit (l/min*m) est au moins cinq fois plus élevé pour la composition polymère que pour la composition silicone ;
- le débit du rideau est d'au moins 6,0 l/min*m, par exemple compris entre 6,0 et 50 l/min*m, par exemple compris entre 6,0 et 15 l/min*m ;
- la vitesse d'enduction est comprise entre 500 et 2000 m/min, par exemple entre 500 et 1500 m/min ;
- la viscosité est plus élevée pour la composition de polymère que pour la composition de silicone, dans laquelle la viscosité est mesurée conformément à la norme ISO 3219:1993 à 25 °C en utilisant un taux de cisaillement de 25 s⁻¹ ;
- la teneur en matières solides de la composition de polymère est comprise entre 8,0 et 40 % et la teneur en matières solides de la composition de silicone est comprise entre 8,0 et 40 % ; et
- la teneur en matières solides de la composition polymère est supérieure ou égale à la teneur en matières solides de la composition silicone.

2. Procédé selon la revendication 1, dans lequel le poids de la couche de support est compris entre 0,5 et 5 g/m² et le poids de la couche de silicone est compris entre 0,05 et 1,0 g/m².

3. Procédé selon la revendication 2, dans lequel le poids de la couche de support est compris entre 1 et 4 g/m² et le poids de la couche de silicone est compris entre 0,05 et 0,8 g/m², par exemple compris entre 0,05 et 0,3 g/m².

4. Procédé selon l'une quelconque des revendications précédentes, dans lequel le débit (l/min*m) est au moins huit fois plus élevé pour la composition polymère que pour la composition silicone.

5. Procédé selon l'une quelconque des revendications précédentes, dans lequel le débit (l/min*m) est jusqu'à 20 fois plus élevé pour la composition polymère que pour la composition silicone.

6. Procédé selon l'une quelconque des revendications précédentes, dans lequel le débit (l/min*m) pour la composition de silicone est d'au moins 0,5 l/min*m.

7. Procédé selon l'une quelconque des revendications précédentes, dans lequel le débit du rideau est d'au moins 7,5 l/min*m, par exemple compris entre 7,5 et 50 l/min*m, par exemple compris entre 7,5 et 15 l/min*m.

8. Procédé selon l'une quelconque des revendications précédentes, dans lequel le grammage mesuré selon la norme ISO 536:2012 du support papier est compris entre 28 et 120 g/m².

9. Procédé selon l'une quelconque des revendications précédentes, dans lequel le revêtement à l'aide de la coucheuse à rideau à fentes multiples est effectué en ligne dans une machine à papier.

10. Procédé selon l'une quelconque des revendications précédentes, dans lequel la largeur du rideau est comprise entre 0,5 et 9 m, par exemple entre 3 et 9 m, ou entre 4 et 8 m.

11. Procédé selon l'une quelconque des revendications précédentes, dans lequel la composition polymère comprend de l'amidon, de la carboxyméthylcellulose (CMC), de l'alcool polyvinylique (PVOH), un copolymère de styrène-butadiène ou un copolymère de styrène-acrylate.

12. Procédé selon l'une quelconque des revendications précédentes, dans lequel la teneur en solides de la composition polymère est comprise entre 15 et 40 %, par exemple entre 20 et 40 %.

13. Procédé selon l'une quelconque des revendications précédentes, dans lequel la teneur en solides de la composition de silicone est comprise entre 10 et 40 %, par exemple entre 10 et 35 %.

14. Bande de papier couché comprenant un substrat de papier recouvert d'une couche de support et d'une couche de silicone continue placée sur la couche de support, laquelle couche de support comprend un polymère, dans laquelle la largeur de la bande de papier couché est comprise entre 3 et 9 m et le poids de la couche de silicone continue est compris entre 0,05 et 0,50 g/m², de préférence entre 0,05 et 0,30 g/m².

15. Bande de papier couché selon la revendication 14, dans laquelle le poids sec de la couche de support est au moins cinq fois plus élevé que le poids sec de la couche de silicone.
